(19) Europäisches Patentamt
European Patent Office
Office européen des brevets

(11) Publication number: **0 069 510**
**B1**

# (12) EUROPEAN PATENT SPECIFICATION

(45) Date of publication of patent specification: **26.02.86**

(51) Int. Cl.$^4$: **C 04 B 41/88**

(21) Application number: **82303285.9**

(22) Date of filing: **23.06.82**

## (54) Method of metallizing sintered ceramics materials.

(30) Priority: **24.06.81 JP 98986/81**

(43) Date of publication of application:
**12.01.83 Bulletin 83/02**

(45) Publication of the grant of the patent:
**26.02.86 Bulletin 86/09**

(84) Designated Contracting States:
**CH DE FR GB IT LI NL SE**

(56) References cited:
**GB-A- 850 190**
**US-A-2 667 432**
**US-A-2 702 750**
**US-A-3 023 492**
**US-A-3 801 363**

(73) Proprietor: **Hitachi, Ltd.**
**5-1, Marunouchi 1-chome**
**Chiyoda-ku Tokyo 100 (JP)**

(72) Inventor: **Miyazaki, Kunio**
**2598-5 Ohkubo-cho**
**Hitachi-shi Ibaraki-ken (JP)**
Inventor: **Ookoshi, Yukio**
**886-2 Motoyoshida-cho**
**Mito-shi Ibaraki-ken (JP)**
Inventor: **Kumagai, Akira**
**1358-2 Tajiri-cho**
**Hitachi-shi Ibaraki-ken (JP)**
Inventor: **Suzuki, Hitoshi**
**863-83 Hakusanwaki Kawajiri-cho**
**Hitachi-shi Ibaraki-ken (JP)**

(74) Representative: **Paget, Hugh Charles Edward et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates to a method of metallizing the surface of a sintered ceramics material which contains a silicon compound as a component or an additive.

Methods of metallizing sintered ceramics bodies, especially sintered alumina ceramics, have long been known. The metallization of ceramics is very important in the provision of electrodes for ceramics capacitors, of insulating sealing in electron tubes etc. in the technology of joining semiconductor elements in semiconductor devices, in the technology of wiring on the substrates of semiconductor devices, and so fourth.

For oxide-type ceramics such as alumina and beryllia, researches have long been made, and there are various metallization methods. For example, for alumina ceramics, there is a method in which a mixed paste consisting of manganese powder and molybdenum powder is applied onto the ceramics and then baked. There have also been proposed pastes in which titanium hydride, aluminium oxide, silicon oxide, calcium oxide, etc. are mixed into this powder (Japanese Laid-open Patent Application No. 55—113683).

This Japanese patent application discloses, in connection with a method of metallizing silicon carbide ceramics, a powdery metallizing composite which contains 100—10 parts by weight of at least one of group-IVa, -Va, -VIa, and -VIIa metals and 0—90 parts by weight of at least one of group-Ib, -IIb, -IIIb, -IVb and -VIII metals. The composite is applied onto silicon carbide ceramics in the form of a paste and is heated so as to form a metal film on the surface of the ceramics. The paste is fired without liquefying (melting) during heating (at 1000°C—1800°C). For instance, a paste consisting of Cu powder (20 weight-%) and Mn powder (80 weight-%) is applied onto a silicon carbide ceramics material and then baked in a vacuum. In this regard, it is noted that the metallized state does not bake well at a temperature of 800°C. In the specification of this application, the heating time for baking the paste is not clearly mentioned. Since the diffusion of metal is utilized, the heating will require a long time.

A method wherein alumina ceramics is metallized using a paste consisting of molybdenum (80%)—silica (7—3%)—manganese dioxide (3—2%)—tungsten (5—15%), is disclosed in Japanese Laid-open Patent Application No. 54—58714. In this, it is described that the metallizing temperature is 1370°C and that the metallization is effected by the diffusion bonding.

There is also known a method wherein silicon nitride ceramics is metallized by diffusion bonding at 1550°C with a paste which contains tungsten powder and manganese powder (Japanese Laid-open Patent Application No. 55—51774).

All of these metallizing methods require heating at a high temperature and for a long time.

Alumina ceramics are used in large quantities chiefly as electronic parts and electronic materials. Silicon carbide ceramics have applications in the same fields as those of alumina ceramics, and are also in the limelight as industrial machine materials for gas turbines, for sealing etc.

If silicon carbide ceramics and alumina ceramics can be readily metallized at a lower temperature and in a shorter time, thermal stresses on the ceramics ought to decrease, and saving of thermal energy as well as enhancement of mass-producibility should be obtained.

By our recent researches, it has been revealed that when conventional pastes containing molybdenum powder or tungsten powder and optionally manganese powder are coated onto and fired on a ceramic substrate the electric resistivity on the ceramic surface which has no coating of the fired paste or a metallic film is decreased due to diffusion of manganese or deposition of vaporized molybdenum. Because of the decrease in surface resistivity, a leak current on the ceramic surface may arise. From this point of view also, it is desirable to carry out metallization treatment at as low a temperature and in as short a time as possible.

An object of the present invention is to provide a metallizing method which can metallize sintered ceramic materials containing silicon compounds, such as silicon carbide ceramics, at a comparatively low temperature and in a short time and which can form a metal film having good adhesion to the substrate.

According to the present invention, there is provided a method of metallizing a sintered ceramics material containing or consisting of a silicon compound, which comprises forming a metal layer containing at least 15% manganese by weight on a surface of the ceramics material and heating the metal layer, characterised in that, the silicon compound being reactable with manganese to form manganese silicide at a temperature lower than the melting point of manganese, the metal layer is heated to a temperature lower than the melting point of manganese to effect a metallization reaction between silicon of the silicon compound and manganese to form manganese silicide, and wherein prior to this reaction the metal layer is brought into highly intimate contact with the surface of the ceramics material, the degree of intimate contact being such that said metallization reaction takes place at said temperature.

The present invention is based on the finding that, under certain conditions for forming the metallized film on a ceramics substrate, a metallizing reaction is readily caused by a quite new mechanism which has not hitherto been predicted. More specifically, this is accomplished by establishing a condition in which manganese atoms or crystal grains in a layer of manganese or an alloy containing manganese can come very close to the crystal grains of silicon carbide or alumina constituting the ceramics substrate.

The invention can provide a method of forming a manganese layer or manganese-containing alloy layer of good adhesion on the surface of a ceramics material containing a silicon compound which is reactable with manganese to produce manganese silicide at a temperature lower than the melting point of

manganese and in a short time. It is also possible to join a film or a sheet of another metal onto the manganese or manganese alloy layer.

The metallized ceramics manufactured according to the present invention may be put to various uses, e.g. directly or as parts or intermediate materials including substrates for semiconductor devices, electronic parts, part of mechanisms, structural materials, etc.

Some general aspects of the invention will now be discussed.

i) Ceramic materials

In the present invention typical ceramic materials are sintered ceramics of silicon carbide and of alumina containing silicon oxide. Silicon carbide and silicon oxide can react with manganese at lower temperatures than the melting point of manganese to produce manganese silicide, provided that a good reaction phase is formed between the ceramics and manganese.

According to our experiments, a strong bond between a sintered silicon nitride ceramics and a manganese or manganese alloy layer at a temperature lower than the melting point (1244°C) of manganese could not be obtained, because bonding strength between silicon and nitrogen atoms is larger than that between silicon and manganese atoms at such low temperatures.

Ceramic materials usable in the present invention are those which contain silicon compounds that are able to form manganese silicide at temperatures lower than the melting point of manganese.

Alumina ceramic sintered bodies typically contain a few % to about ten % by weight of silicon oxide as one ingredient. This kind of alumina ceramics can also be usable in the present invention.

ii) Manganese-containing metal layer

In the present invention, the condition in which manganese atoms or manganese crystals are close to the silicon carbide crystal grains or alumina crystal grains of a ceramics substrate is intended in which substantially no factor hindering the chemical reaction between the surface of the ceramics and the manganese atoms exists between them during metallization.

Some methods for establishing such a condition are as follows:

(1) By vacuum-evaporating manganese onto the ceramics substrate, manganese crystallites or manganese atoms are stuck close to the silicon carbide crystal or the alumina crystal. In one example, there has been obtained the surprising result that the metallization can be performed at 700°C within 1 minute.

(2) A paste for metallization is prepared using a fine powder of manganese (having a particle size of at most 5 μm, particularly at most 2 μm), and the ceramics surface is coated therewith by a screen printing process or the like. When the paste is prepared with such a superfine manganese powder, the manganese crystallites come close to the silicon carbide crystal grains or alumina crystal grains, and any factor hindering the reaction between manganese and the ceramics be eliminated. Commercially available manganese powder is of several 10 μm in size, however fine it may be, and such a powder cannot readily react with the silicon component of the crystal constituting the ceramics.

Instead of a manganese powder alone, a mixed system containing the powder of at least one other metal such as copper, nickel and titanium may be used. In this case, the metal or metals to be combined is/are selected so as not to form a fragile compound with the ceramics or manganese.

The paste may be prepared so that an alloy containing manganese and copper, nickel, titanium or the like is finely pulverized, as stated above.

(3) An alloy between manganese and copper, nickel or titanium is deposited onto the ceramics substrate by vacuum evaporation. In this case, it has been experimentally verified that, since the vapour pressure of manganese is higher, a manganese-rich film is formed on the ceramics surface and is overlaid with a layer rich in the other alloy component.

Even such an evaporated alloy film brings a result similar to that in method (1).

(4) A foil, wire or powder of a specified alloy containing manganese and copper, nickel or titanium is placed on the surface of the ceramics, and is heated to or above the melting point of the alloy under pressure. Thus, the alloy is melted to form a liquid phase. The liquid phase formed in this way is in the state in which manganese is close to the crystal grains of the ceramics substrate, and there is no longer any factor hampering the reaction between the ceramics and manganese.

Especially preferred alloy compositions are 25 to 45 wt% manganese balance copper (melting point: 870°C±approx. 10°C), 50 to 70% manganese balance nickel (melting point: 1018°C±approx. 10°C), and 42—43% manganese balance nickel (melting point: 1175°C±approx. 10°C (percentages by weight). With these alloys, metallization can be effected at low temperatures. In the process of Japanese Laid-open Patent Application No. 55—113683 referred to above, even when a composition of copper (20%)—manganese (80%) is used, the metallization is first effected by a heating operation at least 1000°C for a long time, whereas by the present invention, a good metal film may be obtained by heating at about 860°C for only 1 minute or less.

In the present method, the heating may be performed with a film of another metal, e.g. iron, copper, nickel, titanium or aluminium, or a foil or sheet of an alloy consisting of such metals is placed on the manganese alloy layer. Furthermore, silicon carbide ceramics or commercially available alumina ceramics may be placed on the manganese alloy layer. The pressure applied may be at least 0.01 kg/mm$^2$ ($1\times10^2$ kPa)

and at most 1 $kg/mm^2$ is usually sufficient. The layer of manganese or manganese alloy can be formed by sputtering or plasma (flame) spraying using ultra-fine powder.

iii) Bonding of metal or ceramics to metallized ceramics

The metallized ceramics may be bonded to other metals or ceramics, if desired.

If a manganese-containing metal layer (or a manganese layer itself) is formed by vacuum evaporation sputtering, paste-printing or firing of the coating or film, a plating of iron, copper, nickel or the like may be formed on the metallized surface by an electro-plating or electroless-plating and the plating is then heated to a temperature to cause diffusion bonding (preferably lower than the metallization temperature) so as to strongly adhere the plating to the metallized surface. In case of aluminium or titanium, the metal may be coated on the metallized surface by vacuum evaporation or sputtering.

When a foil of manganese alloy, such as manganese copper alloy, is used to form a manganese-containing layer on a ceramics, a second foil, plate or wire of iron, copper, nickel, titanium or an alloy thereof may be superposed on the manganese copper foil which is placed on the ceramics, and then the foils and ceramic may be heated to a temperature lower than the melting point of manganese and lower than the melting point of the second metal foil, plate etc. to be bonded under a pressure of 0.01 $kg/mm^2$ or higher.

iv) Surface roughness of the ceramics

It has been found that the relationship between the surface roughness $\Delta H$ of silicon carbide ceramics or alumina ceramics and the particle size of the manganese powder or manganese alloy powder to be used is important for the closeness of the ceramics surface and the manganese crystals or atoms.

By way of example, when the surface roughness $\Delta H$ of the ceramics is represented in µm, the particle size of the manganese powder in the paste ought to be smaller than the roughness ($\Delta H$). So, when the roughness is 5 µm or less, the particle size of the manganese powder should be smaller than 5 µm. In this way, the manganese particles can be closely stuck to the silicon carbide crystal grains or alumina crystal grains.

If the manganese film has been formed by evaporation, sputtering or flame spraying, the moving manganese particles are very small and therefore enter any minute recesses in the surface of the ceramics, so that the manganese particles of atoms and the crystal of the ceramics come very close to each other. Also if a melt of the manganese alloy is formed, this melt can enter any minute recesses in the ceramics surface.

In the ways described above, there can thus be established a condition in which the manganese atoms and the atoms of the reactive component of the ceramics can be coupled.

In any of the foregoing methods (1)—(4), when the metallized ceramics is to be used as a substrate for an electronic circuit, the metallized film of manganese or manganese alloy may be formed in a selected pattern, and a conductor pattern of aluminium of copper may be formed thereon.

Even when the methods (1)—(4) are replaced by sputtering or flame spraying employing superfine powder, similar metal films may be obtained.

In the case of silicon carbide ceramics, it is considered that manganese and silicon will react as indicated below, to metallize the ceramics. In this connection, when the bonded surface was polished and then analyzed, the presence of liberated carbon was confirmed:

$$SiC + Mn \rightarrow SiMn + C$$

In metallizing silicon carbide ceramics according to the present invention, therefore, it is thought essential to establish a state in which the above reaction may proceed easily.

On the other hand, in the case of alumina ceramics the metallizing mechanism has not yet been clarified yet. It is conjectured, however, that $SiO_2$ which is a component in alumina will contribute to the chemical reaction with manganese to produce manganese silice, e.g. as follows:

$$SiO_2 + Mn \rightarrow SiMn + O_2$$

Examples of the invention will now be described by way of example with reference to the accompanying drawings, in which:—

Figure 1 is a sectional view of the heating portion in a metal—ceramics joining equipment useful in the present invention;

Figure 2 is a graph showing the relationship between the Mn content of a manganese-copper alloy foil and the peel strength of a body formed;

Figure 3(a) and 3(b) are perspective views of a sample showing features of a separation test, while Figure 3(c) is a sectional view showing a tension separation test;

Figure 4 is a graph showing the relationship between joining temperature and adhesive strength;

Figure 5 is a graph showing the adhesive strength of a 3 mm-wide interface between a metallized layer and an SiC substrate plotted against heating temperature in an example of the present invention; and

Figure 6 is a graph showing the adhesive strength of an interface similar to that in Figure 5 plotted against the Mn content of a Cu-Mn or Ni-Mn alloy in another example of the present invention.

Example 1

Figure 1 shows joining jigs for manufacturing a metal-ceramics joint body according to the present invention. Indicated are the ceramics 1, a metal foil 2, a manganese copper foil 3, ceramic supporters 4,4′, copper blocks 5,5′, and an induction heating coil 6.

The ceramics 1 was a sintered body of SiC which contained 2 weight-% of BeO. It was 1.5 mm thick and 15 mm square and its joint surface was finished to a surface roughness (ΔH) not greater than 5 μm. The metal 2 used was a copper foil which was 100 μm thick, and the foils 3 were, in various experiments, 25 μm thick and made of Mn-Cu alloys containing 1—60 weight-% of Mn. With a pressure of 0.05 $kg/cm^2$ applied to the joint surface through the jigs 4,4′ the joint surface was heated to a predetermined temperature according to the particular foil 3 by high-frequency induction heating. The pressure was applied to the joint surface until the solidification of the melt of the foil 3 was completed.

The heating rate was about 1,000°C/minute, and the temperature at which a melt was formed was detected in terms of the distance between the joining jigs 4,4′. After the foil 3 reached its melting point, the heating was maintained for about 1 second, whereupon it was stopped and the joint was immediately quenched (natural cooling). During the heating, argon gas was blown against the periphery of the joint surface to prevent the oxidation of the foil 3 and copper foil 2 as well as of the copper blocks 5,5′. The greater part of the melted alloy layer remained at the joint surface, but the melt was slightly extruded to outside the joint portion.

Figure 2 is a graph showing the relationship between the Mn content of the Mn-Cu alloy foil and the peel strength of the joint body at room temperature. When the Mn content of the foil is 30% or greater, the joint body ruptures at the copper foil, from which it is understood that an excellent joint is attained. When the Mn content is small, sufficient jointing is not attained with heating for a short time, and the joint body separates at the joint interface.

In the experiments of Figure 2, the metallization temperature at 15% Mn content was 930°C, at 25% Mn 880°C, 30% Mn 870°C, at 35% Mn 860°C, at 40% Mn 870°C, at 50% Mn 900°C, and at 60% Mn was 940°C.

Figures 3a to 3c are perspective views of specimens showing the essentials of the peeling test of Figure 2. More specifically, Figure 3a shows a slit 7 provided in the middle of the ceramics 1 which in Figure 3b is bent 90 degrees so as to divide the ceramics 1 into two, and Figure 3c shows how the peel test of the copper foil 2 is carried out by pulling the specimen in the directions of the arrows by the use of pulling jigs 8. The area of the copper foil of the specimen shown in Figure 3c was 3 mm×3 mm.

For each sample which ruptured at the copper foil in the peel test of Figure 2, the state of the interface between the SiC crystal grains and the alloyed layer (manganese-containing layer) was observed by various means.

The joined copper foil and alloyed layer were etched and removed from the sintered SiC body, and the surface of the body was observed with a microscope. This surface, which had been finished flat before the joining, was formed with uneven parts as under corrosion. It is considered that SiC and Mn reacted, the reaction being one cause of the rigid bonding.

Example 2

The members joined and the foil used (having a thickness of 50 μm and made of an Mn-Cu alloy containing 37.8 weight-% of Mn and the balance of Cu) were used as in Example 1, and the ceramics and the copper foils were joined at various heating temperatures. The other joining conditions were the same as in Example 1. Samples thus obtained were subjected to separation tests at room temperature as described in Example 1.

Figure 4 is a graph showing the relationship between the heating temperature for metallization and the adhesive strength. The melting temperature of the foil is 860°C. If the heating temperature is lower than the melting point of the Mn-Cu foil, joining is very difficult. It is also seen that a heating temperature over 900°C results in low adhesive strength. This is interpreted as follows. When the heating temperature is high, the melt of the Mn-Cu alloy will be extruded more out of the joint surface by the pressure applied and alloying of the Mn-Cu alloy with the copper foil will proceed, reducing the Mn content, so that the adhesive strength will be lower. Accordingly, a proper Mn content is required to achieve a high bonding strength in a joint body based on the reaction between the silicon compound of ceramics and Mn.

As the heating period, a short time of 1—10 seconds is preferable. An excessively long time is considered undesirable because the reaction between Mn and Si becomes excessive, resulting in a lowered adhesive strength.

Pressure application is necessary in order to promote the spread of the melt and to let the melt obtain intimate contact with the surface of the ceramics. Applied pressure of from at least 0.01 $kg/mm^2$ to at most 1 $kg/mm^2$, particularly 0.02—0.5 $kg/mm^2$, are preferable. Excessive pressure application might damage the ceramics.

Example 3

An SiC sintered body containing 2 weight-% of BeO (surface roughness: 2 μm), an $Al_2O_3$ sintered body

(surface roughnesss: 3 μm) and an $Si_3N_4$ sintered body (surface roughness: 3. μm) were subjected to metallization and bonding in the following ways.

(1) A foil of an Mn-Cu alloy containing 37.8 weight-% of Mn, the balance being Cu, and having a thickness of 50 μm and a copper foil having a thickness of 100 μm or a nickel foil having a thickness of 50 μm were stacked on the ceramics. Heating and bonding were carried out in the same manner as described in Example 2.

(2) A foil of an Mn-Ni alloy containing 60 weight-% of Mn, the balance being Ni, and a copper foil having a thickness of 100 μm or a nickel foil having a thickness of 50 μm were stacked on the ceramics. Heating was conducted at 1018°C under a pressure of 0.05 kg/mm$^2$.

(3) A foil of 42.5% Mn, balance Ti alloy having a thickness of 50 μm and a copper foil of 100 μm thick or a nickel foil of 50 μm thick were stacked on ceramics. Heating was conducted at 1175°C under a pressure of 0.05 kg/mm$^2$ for one to several seconds.

(4) A manganese film of 2.5 μm thick was formed on ceramics by vacuum evaporation. Heating was conducted at 700°C for 1 minute, and then a copper plating of 5 μm thick or a nickel plating of 5 μm thick was formed on the metallized surface. The plated ceramics were heated at 675°C for 5 to 10 minutes.

(5) A composite film 2.5 μm thick was formed by vacuum evaporation of an alloy containing 37.5% manganese, balance copper. Heating was conducted at 700°C for one minute. Copper electro-plating or nickel electro-plating was performed on the metallized surface and the plating carrying ceramics were then heated to 675°C for 5 to 10 minutes.

(6) A paste in which manganese powder of a mean particle size of 20 μm was dispersed in a mixture of nitrocellulose and butylacetate was prepared. Metallization was conducted at 850°C for 5 minutes. Another paste was prepared in which manganese powder had a particle size of less than 2 μm.

The pastes were separately coated by a screen printing process on ceramics and fired (metallized) at 800°C for 5 minutes. Then, a copper or nickel electro-plating layer 2 μm thick was formed by electroplating. Heating was conducted at 675°C for 5 to 10 minutes.

(7) A paste containing an alloy of 37.5% manganese, balance copper powder of particle size less than 2 μm and a paste containing a mixture of manganese powder of size less than 2 μm and copper powder of size less than 2 μm were prepared in the same manner as in (6) above. Metallization and bonding were carried out as in (6).

The other joining conditions and the separation test were the same as in Example 1.

The results of all these tests are set out in Table 1.

TABLE 1

| Forming method | Ceramics / Member joined | SiC None | SiC Cu | SiC Ni | $Al_2O_3$ None | $Al_2O_3$ Cu | $Al_2O_3$ Ni | $Si_3N_4$ None | $Si_3N_4$ Cu |
|---|---|---|---|---|---|---|---|---|---|
| Alloy foil | Cu-Mn | ◎ | ◎ | ◎ | ◎ | ◎ | ◎ | ○ | Δ |
| | Ni-Mn | ◎ | ◎ | ◎ | ○ | ○ | ○ | × | × |
| | Ti-Mn | ◎ | ○ | ○ | ○ | ○ | ○ | × | × |
| Evaporated film | Mn | ◎ | ◎ | ◎ | ◎ | ○ | ○ | – | – |
| | Mn-Cu alloy | ◎ | ◎ | ○ | ○ | ○ | ○ | – | – |
| Paste | Mn powder (at most 20 μm) | Δ | Δ | × | – | – | – | × | × |
| | Mn powder (at most 2 μm) | ◎ | ◎ | ○ | – | – | – | × | – |
| | Cu-Mn alloy (at most 2 μm) | ◎ | ◎ | ○ | – | – | – | – | – |
| | Cu powder —Mn powder (at most 2 μm) | ○ | ○ | ○ | – | – | – | – | – |

Note: In the case of the manganese alloy foils, the members joined are foils of copper or nickel. In the cases of the evaporated-manganese containing films and the manganese-containing pastes, the members joined are electro-plated films of copper or nickel.

In this table, the columns headed "none" gives results for samples in which no member joined to the ceramics by the manganese containing layer, in order to permit assessment of the metallized film. In this case a BN plate was inserted between the manganese-copper alloy foil and jig 5 in Figure 1. The BN plate has no wettability with respect to the alloy foil.

In the columns headed "none" the symbol ◎ indicates a metallized film which was smooth and had good adhesion, ○ one which was somewhat low in adhesion, Δ one which was somewhat inferior in smoothness and somewhat low in adhesion, and × one which was inferior in smoothness and/or adhesion.

In the columns headed Cu and Ni (i.e. for the samples in which a member was joined), ◎ indicates a sample which had remarkably high joint strength and which ruptured in the joined member in the separation test, ○ a sample which had a high joint strength, Δ a sample which had a low joint strength, and × a sample which had a conspicuously low joining strength.

Example 4

An SiC electric insulator (surface roughness: 2 μm) sintered by using 5 weight-% of BeO as a sintering aid and organo-silicone as a coking agent was employed as a substrate. An Mn film 2 μm thick was formed on the surface of the substrate by electron beam process in a vacuum. Several such structures were subsequently heated at the various temperatures shown in Figure 5 in argon gas for 1 minute, to cause SiC and Mn to react. Then, an Ni layer 5 μm thick was formed on the Mn film by electroplating and the resultant structure was heated and held at 700°C for 10 minutes so as to join the Ni layer and the Mn layer by diffusion. In order to assess the adhesion between the resultant metallized layer and the SiC substrate, a Cu foil 200 μm thick was soldered onto the Ni layer, and the adhesive strength of an area of 3 mm×3 mm was measured. The results are shown in Figure 5. The adhesive strength was about 7 kg for a heating temperature in the range 600—1000°C, rupture occurring within the solder layers in all the samples. Very high adhesion strengths were thus exhibited.

Example 5

An SiC sintered compact (surface roughness: 2 μm) obtained using 2% by weight of ALN as an aid was employed as a substrate, on which a Cu-Mn or Ni-Mn alloy film 2.5 μm thick was formed by vacuum evaporation. Various samples with different Mn contents were used. Subsequently, the resultant structure

was heated at 700°C in a vacuum for 1 minute so as to cause SiC and Mn in the alloy to react. Then, an Ni film 5 µm thick was formed on the Cu-Mn or Ni-Mn alloy layer by electroplating, and a diffusion treatment was conducted by heating and holding the resultant structure at 675°C for 10 minutes. In order to assess the adhesion between the resultant metallized layer and the SiC substrate, a Cu foil was soldered onto the Ni plated layer and the adhesive strength of an area of 3 mm×3 mm was evaluated as in Example 4. The results for the various samples are shown in Figure 6. In the case of both Ni and Cu, the adhesive strengths were about 7 kg or above at 25 atomic % of Mn or more, and rupture occurred within the solder layers in all the samples.

The metallized samples of Cu—40 atomic-% Mn and Ni—50 atomic-% Mn were subjected to the separation test after performing 1,000 thermal cycles over the range −50°C to +150°C. They were inspected for any degradation in adhesion. Good reliability was exhibited.

Example 6

The samples obtained in Example 2 having a metallized film of a manganese containing layer and a copper foil were subjected to etching to remove the film except for portions to form a pair of electrodes. The surface conditions were inspected to obtain the results set out in Table 2. For comparison, tests were conducted in which a conventional molybdenum manganese paste was coated and fired at 1550°C. Measurements were made at 20°C.

TABLE 2

| Applied voltage (V) | As etched * | Surface leakage current (A) Ultrasonic cleaning ** | Sand-blasting *** | Mo-Mn paste |
|---|---|---|---|---|
| 50 | $5\times10^{-6}$ | $1\times10^{-10}$ | $1\times10^{-11}$ | $1\times10^{-6}$ |
| 100 | — | $3\times10^{-10}$ | $6\times10^{-11}$ | — |
| 200 | — | $6\times10^{-10}$ | $3\times10^{-10}$ | — |
| 300 | — | $1\times10^{-9}$ | $7\times10^{-10}$ | — |
| 400 | — | $5\times10^{-9}$ | $2\times10^{-9}$ | — |
| 500 | — | $1\times10^{-8}$ | $6\times10^{-9}$ | — |
| 600 | — | $2\times10^{-8}$ | $1\times10^{-8}$ | — |
| 700 | — | $7\times10^{-8}$ | $4\times10^{-8}$ | — |
| 800 | — | $1\times10^{-7}$ | $8\times10^{-8}$ | — |
| 900 | — | $3\times10^{-7}$ | $1\times10^{-7}$ | — |
| 1000 | — | — | $5\times10^{-6}$ | $1\times10^{-3}$ |

Notes:

* Etched surfaces were rinsed with pure water

** Etched surfaces were rinsed with pure water, and then the rinsed surfaces were cleaned with ultrasonic cleaner in acetone.

*** After rinsing of the surfaces with water, the surfaces were polished by sand-blasting and rinsed with pure water.

Compared with the conventional Mo-Mn paste, the ceramic surfaces according to the present invention show much less deterioration.

Example 7

Samples obtained in Example 2 were re-heated in air. It was found that the ceramics of the present invention which were tested showed no degradation in adhesive strength up to 600°C. Even at 650°C only a slight decrease in adhesive strength was observed as shown by Table 3 below.

The samples were also subjected to a heat-cycle test of (−50°C~+150°C)×1000 times, but no appreciable decrease in adhesive strength was observed.

TABLE 3

| Re-heating temp (°C) | Adhesive strength (kg) |
|---|---|
| 100 | More than 19 (ruptured at Cu foil) |
| 500 | ditto |
| 600 | ditto |
| 650 | 18 |
| 700 | 10 |
| 750 | 5 |

Example 8

To the sample obtained in Example 2 a silicon diode was soldered. The structure of this device then consisted of diode-solder-copper foil-Mn-containing layer-SiC.

For comparison, another silicon diode was soldered to a nickel plating formed on a Mo-Mn metallized layer. The Mo-Mn metallized layer was formed using a conventional Mo-Mn paste fired on an SiC ceramic. The nickel plating was necessary to assure wettability with solder.

In the device according to the present invention, the thickness of the SiC ceramics was 0.6 mm and the copper foil 50 µm. In the comparison device, the thickness of the SiC ceramics was 0.6 mm and the nickel plating 0.5 µm.

For these devices, initial thermal resistance and thermal resistance after 1000 heat cycles of −50°C~+150°C are shown in Table 4. The thermal resistance was calculated by dividing the difference of the temperature $T_1$ at the interface between the diode and solder layer and the bottom surface temperature $T_2$ of the SiC ceramics by the quantity Q of heat generation in the diode i.e. $(T_1 - T_2)/Q$.

TABLE 4

| | Thermal resistance (°C/W) Initial | After heat cycle |
|---|---|---|
| Conventional | 0.64~0.80 | 0.8~1.2 |
| Invention | 0.54 | 0.55 |

**Claims**

1. A method of metallizing a sintered ceramics material containing or consisting of a silicon compound, which comprises forming a metal layer containing at least 15% manganese by weight on a surface of the ceramics material and heating the metal layer, characterised in that, the silicon compound being reactable with manganese to form manganese silicide at a temperature lower than the melting point of manganese, the metal layer is heated to a temperature lower than the melting point of manganese to effect a metallization reaction between silicon of the silicon compound and manganese to form manganese silicide, and wherein prior to this reaction the metal layer is brought into highly intimate contact with the surface of the ceramics material, the degree of intimate contact being such that said metallization reaction takes place at said temperature.

2. A method according to claim 1, wherein the metal layer is a film selected from manganese, manganese-copper alloy, manganese-nickel alloy, manganese-titanium alloy and mixtures thereof, the film being formed by evaporation, sputtering or plasma spraying.

3. A method according to claim 1 wherein the metal layer is a melt of an alloy selected from manganese-copper, manganese-nickel and manganese-titanium, the metal layer being pressed against the surface of the ceramics material by means of another solid member, applying a pressure of at least 0.01 kg/mm² (1×10² kPa).

4. A method according to claim 3, wherein the metallization reaction takes place substantially at the same time as the formation of the melt.

5. A method according to any one of claims 2 to 4 wherein one of the following manganese alloys is used: 25—45% by weight manganese balance copper, 50—70% by weight manganese balance nickel, 42—43% by weight manganese balance titanium.

6. A method according to claim 1 wherein the ceramics material is a sintered silicon carbide ceramics or a sintered alumina containing silicon oxide and has a surface roughness of at most 5 µm, and the said metal layer is formed by (i) coating a surface thereof with a paste which contains manganese powder having a particle size smaller than the surface roughness, (ii) removing any dispersant in said paste and

forming a metal layer on the ceramics surface, and (iii) heating the resultant structure to said temperature lower than the melting point of manganese for a time sufficient to effect said metallization reaction between the manganese and the silicon carbide or silicon oxide.

7. A method according to claim 3 wherein said ceramics material is a sintered silicon carbide ceramics or a sintered alumina containing silicon oxide, and the method comprises the steps of (i) placing a foil on a surface of the ceramics material, said foil being made of an alloy which contains 25 to 45% of manganese the balance being copper, an alloy which contains 50 to 70% of manganese the balance being nickel, or an alloy which contains 42 to 43% of manganese the balance being titanium, and (ii) heating said foil to a temperature which is at least the melting point of said alloy but is lower than the melting point of manganese under application of a pressure of at least 0.01 $kg/mm^2$ so as to melt said foil into a liquefied metal layer and to effect the said metallization reaction between the silicon carbide or silicon oxide and the manganese.

8. A method according to claim 2 wherein the ceramics material is a sintered aluminium oxide containing silicon oxide and the method comprises the steps (i) forming a metal layer of manganese or a mixed metal layer of manganese and another metal on a surface of the ceramics material by vacuum evaporation or sputtering, and (ii) heating the resultant structure to a temperature lower than the melting point of manganese for a time sufficient to effect the metallization reaction between the manganese and the silicon oxide.

9. A method according to claim 6 wherein said paste contains at least one of copper powder, nickel powder and titanium powder.

10. A method according to any one of claims 6 to 9 wherein a further metal material to be bonded to the ceramics is placed on said metal layer, and the resultant structure is heated to a temperature lower than the melting point of the metal material under application of pressure so as to effect the reaction.

**Patentansprüche**

1. Verfahren zum Metallisieren eines gesinterten Keramikwerkstoffs, der aus einer Siliziumverbindung besteht oder eine solche enthält, wobei eine mindestens 15 Gewichtsprozent Mangan enthaltende Metallschicht auf einer Oberfläche des Keramikwerkstoffs ausgebildet und erwärmt wird, dadurch gekennzeichnet, daß, indem die Siliziumverbindung mit Mangan bei einer unter dem Schmelzpunkt von Mangan liegenden Temperatur unter Bildung von Mangansilizid reaktionsfähig ist, die Metallschicht auf eine Temperatur unter dem Schmelzpunkt von Mangan erwämt wird, um eine Metallisierungsreaktion zwischen Silizium der Siliziumverbindung und Mangan zur Bildung von Mangansilizid zu bewirken, und daß vor dieser Reaktion die Metallschicht mit der Oberfläche des Keramikwerkstoffs in eine sehr innige Berührung gebracht wird, deren Maß so hoch ist, daß die Metallisierungsreaktion bei der besagten Temperatur stattfindet.

2. Verfahren nach Anspruch 1, wobei es sich bei der Metallschicht um einen aus Mangan, Mangan-Kupfer-Legierung, Mangan-Nickel-Legierung, Mangan-Titan-Legierung und Gemischen davon ausgewählten Film handelt, der durch Aufdampfen, Sputtern oder Plasma-Aufsprühen gebildet wird.

3. Verfahren nach Anspruch 1, wobei es sich bei der Metallschicht um eine Schmelze einer Legierung handelt, die aus Mangan-Kupfer, Mangan-Nickel und Mangan-Titan ausgewählt ist, und die Metallschicht mittels eines weiteren massiven Teils unter Anwendung eines Druckes von mindestens 0,01 $kg/mm^2$ ($1 \times 10^2$ kPa) gegen die Oberfläche des Keramikwerkstoffs gedrückt wird.

4. Verfahren nach Anspruch 3, wobei die Metallisierungsreaktion im wesentlichen gleichzeitig mit der Ausbildung der Schmelze stattfindet.

5. Verfahren nach einem der Ansprüche 2 bis 4, wobei eine der folgenden Manganlegierungen verwendet wird: 25 bis 45 Gewichtsprozent Mangan, Rest Kupfer; 50 bis 70 Gewichtsprozent Mangan, Rest Nickel; 42 bis 43 Gewichtsprozent Mangan, Rest Titan.

6. Verfahren nach Anspruch 1, wobei der Keramikwerkstoff eine gesinterte Siliziumcarbid-Keramik oder ein Siliziumoxid enthaltendes gesintertes Aluminiumoxid ist und eine Oberflächenrauhigkeit von mindestens 5 µm aufweist, und wobei die Metallschicht dadurch gebildet wird, daß (i) eine Oberfläche davon mit einer Paste beschichtet wird, die Manganpulver einer unter der Oberflächenrauhigkeit liegenden Partikelgröße enthält, (ii) etwaige Dispergierungsmittel aus der Paste entfernt werden und auf der Keramikoberfläche eine Metallschicht ausgebildet wird, und (iii) die sich ergebende Struktur auf eine Temperatur unter dem Schmelzpunkt von Mangan über eine Zeit erwärmt wird, die ausreicht, um die Metallisierungsreaktion zwischen dem Mangan und dem Siliziumcarbid oder Siliziumoxid zu bewirken.

7. Verfahren nach Anspruch 3, wobei es sich bei dem Keramikmaterial um eine gesinterte Siliziumcarbid-Keramik oder ein Siliziumoxid enthaltendes gesintertes Aluminiumoxid handelt und wobei das Verfahren die Schritte umfaßt: (i) Auflegen einer Folie auf eine Oberfläche des Keramikwerkstoffs, wobei die Folie aus einer Legierung besteht, die 25 bis 45% Mangan, Rest Kupfer enthält, oder aus einer Legierung, die 50 bis 70% Mangan, Rest Nickel enthält, oder aus einer Legierung, die 42 bis 43% Mangan, Rest Titan enthält, und (ii) Erwärmen der Folie auf eine Temperatur, die mindestens auf dem Schmelzpunkt der Legierung, aber unter dem Schmelzpunkt von Mangan liegt, unter Anwendung eines Drucks von mindestens 0,01 $kg/mm^2$, um die Folie zu einer verflüssigten Metallschicht zu schmelzen und die Metallisierungsreaktion zwischen dem Siliziumcarbid oder Siliziumoxid und dem Mangan zu bewirken.

8. Verfahren nach Anspruch 2, wobei es sich bei dem Keramikwerkstoff um ein Siliziumoxid enthaltendes gesintertes Aluminiumoxid handelt und das Verfahren die Schritte umfaßt: (i) Ausbilden einer Metallschicht aus Mangan oder einer gemischten Metallschicht aus Mangan und einem weiteren Metall auf einer Oberfläche des Keramikwerkstoffs durch Vakuumaufdampfen oder Sputtern, und (ii) Erwärmen der sich ergebenden Struktur auf eine Temperatur, die unter dem Schmelzpunkt von Mangan liegt, über eine Zeit, die ausreicht, um die Metallisierungsreaktion zwischen dem Mangan und dem Siliziumoxid zu bewirken.

9. Verfahren nach Anspruch 6, wobei die Paste mindestens einen der Bestandteile Kupferpulver, Nickelpulver und Titanpulver enthält.

10. Verfahren nach einem der Ansprüche 6 bis 9, wobei auf die Metallschicht ein weiterer Metallwerkstoff, der an der Keramik zur Haftung gebracht werden soll, aufgebracht und die sich ergebende Struktur auf eine Temperatur unter dem Schmelzpunkt des Metallwerkstoffs unter Anwendung von Druck erwärmt wird, um die Reaktion zu bewirken.

**Revendications**

1. Procédé pour réaliser la métallisation d'un matériau céramique fritté contenant un composé du silicium ou constitué par un tel composé, et qui inclut la formation d'une couche métallique contenant au moins 15% de manganèse en poids sur une surface du matériau céramique et à chauffer la couche métallique, caractérisé en ce que le composé de silicium est apte à réagir avec le manganèse de manière à former du siliciure de manganèse à une température inférieure au point de fusion du manganèse, la couche métallique étant chauffée à une température inférieure au point de fusion du manganèse de manière à réaliser une réaction de métallisation entre le silicium du composé de silicium et du manganèse de manière à former du siliciure de manganèse, et qu'avant cette réaction, la couche métallique est amenée en étroit contact intime avec la surface du matériau céramique, le degré de contact intime étant tel que ladite réaction de métallisation s'effectue à ladite température.

2. Procédé selon la revendication 1, selon lequel la couche métallique est une pellicule constituée en un matériau choisi parmi le manganèse, un alliage de manganèse et de cuivre, un alliage de manganèse et de nickel, un alliage de manganèse et de titane et des mélanges de ces matériaux, la pellicule étant formée par évaporation, par dépôt par pulvérisation ou par projection de plasma.

3. Procédé selon la revendication 1, selon lequel la couche métallique est une masse fondue d'un alliage choisi parmi un alliage de manganèse-cuivre, un alliage de manganèse-nickel et un alliage de manganèse-titane, la couche métallique étant comprimée contre la surface du matériau céramique à l'aide d'un autre élément rigide, moyennant l'application d'une pression à au moins 0,01 $kg/mm^2$ ($1\times10^2$ kPa).

4. Procédé selon la revendication 3, selon lequel la réaction de métallisation intervient essentiellement en même temps que la formation de la masse fondue.

5. Procédé selon l'une quelconque des revendications 2 à 4, selon lequel on utilise l'un des alliages suivants du manganèse: 25—45% en poids de manganèse et le reste en cuivre, 50—70% en poids de manganèse et le reste en nickel, 42—43% en poids de manganèse et le reste en titane.

6. Procédé selon la revendication 1, selon lequel le matériau céramique est une céramique formée de carbure de silicium fritté ou de l'alumine fritté contenant de l'oxyde de silicium, et possède une rugosité de surface d'au moins 5 µm, et ladite couche métallique est formée par (i) recouvrement d'une surface avec une pâte qui contient de la poudre de manganèse possédant des particules d'une taille inférieure à la rugosité de surface, (ii) enlèvement de tout agent dispersant dans ladite pâte et formation d'une couche métallique sur la surface du matériau céramique, et (iii) chauffage de la structure obtenue à ladite température inférieure au point de fusion du manganèse, pendant un intervalle de temps suffisant pour mettre en oeuvre ladite réaction de métallisation entre le manganèse et le carbure de silicium ou l'oxyde de silicium.

7. Procédé selon la revendication 3, selon lequel ledit matériau céramique est une céramique formée de carbure de silicium fritté ou de l'alumine frittée contenant de l'oxyde de silicium, le procédé incluant les phase opératoires consistant (i) à placer une feuille sur une surface du matériau céramique, ladite feuille étant constituée en un alliage qui contient 25 et 45% de manganèse et le reste en cuivre, un alliage qui contient 50 à 70% de manganèse et le reste en nickel ou un alliage qui contient 42 à 43% de manganèse et le reste en titane, et (ii) à chauffer ladite feuille à une température qui est égale au moins au point de fusion dudit alliage et mais est inférieure au point de fusion du manganèse, moyennant l'application d'une pression d'au moins 0,01 $kg/mm^2$, de manière à amener ladite feuille par fusion sous la forme d'une couche de métal liquide et à mettre en ouvre ladite réaction de métallisation entre le carbure de silicium ou l'oxyde de silicium et le manganèse.

8. Procédé selon la revendication 2, selon lequel le matériau céramique est un oxyde d'aluminium fritté contenant de l'oxyde de silicium, ce procédé incluant les phases opératoires consistant à (i) former une couche métallique de manganèse ou d'une couche de métal mixte constitué par du manganèse et un autre métal à la surface du matériau céramique par évaporation sous vide ou pulvérisation, et (ii) à chauffer la structure obtenue à une température inférieure au point de fusion du manganèse pendant un intervalle de temps suffisant pour mettre en oeuvre la réaction de métallisation pour le manganèse et l'oxyde de silicium.

9. Procédé selon la revendication 6, selon lequel ladite pâte contient au moins un des éléments suivants: une poudre de cuivre, une poudre de nickel et une poudre de titane.

10. Procédé selon l'une quelconque des revendications 6 à 9, selon lequel un autre matériau métallique devant être fixé au matériau céramique déplacé sur ladite couche métallique, et la structure obtenue est chauffée à une température inférieure au point de fusion du matériau métallique, moyennant l'application d'une pression de manière à mettre en oeuvre la réaction.

FIG. 1

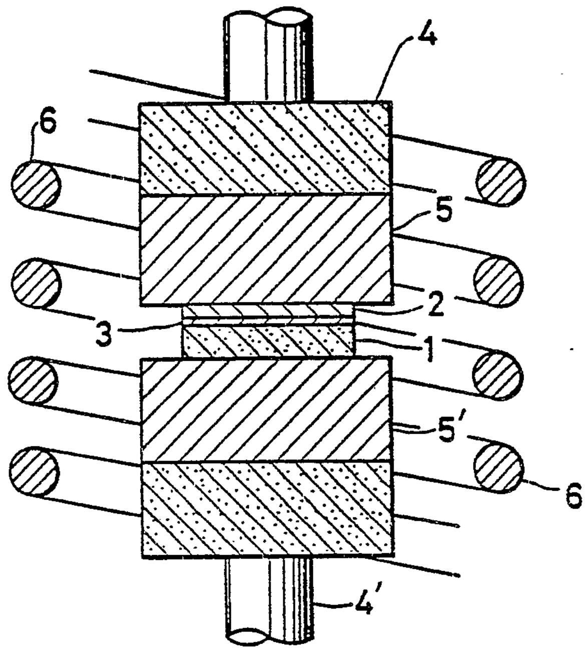
4
6
5
2
3
1
5'
6
4'

FIG. 2

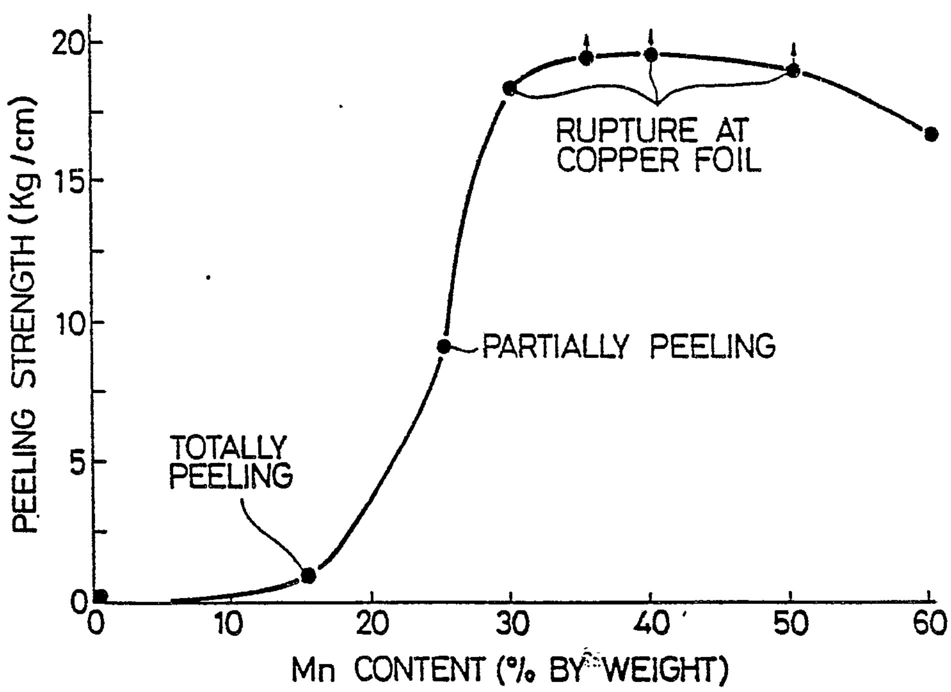
PEELING STRENGTH (Kg/cm)
20
15
10
5
0
0
10
20
30
40
50
60
Mn CONTENT (% BY WEIGHT)
RUPTURE AT
COPPER FOIL
PARTIALLY PEELING
TOTALLY
PEELING

FIG. 3c

FIG. 3b

FIG. 3a

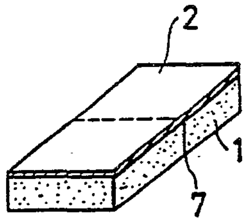


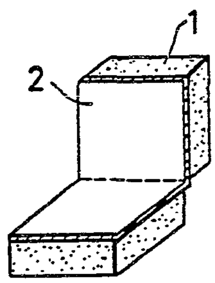


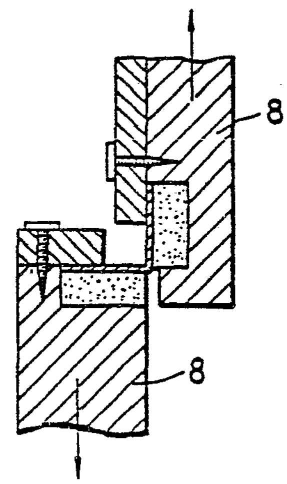


FIG. 4

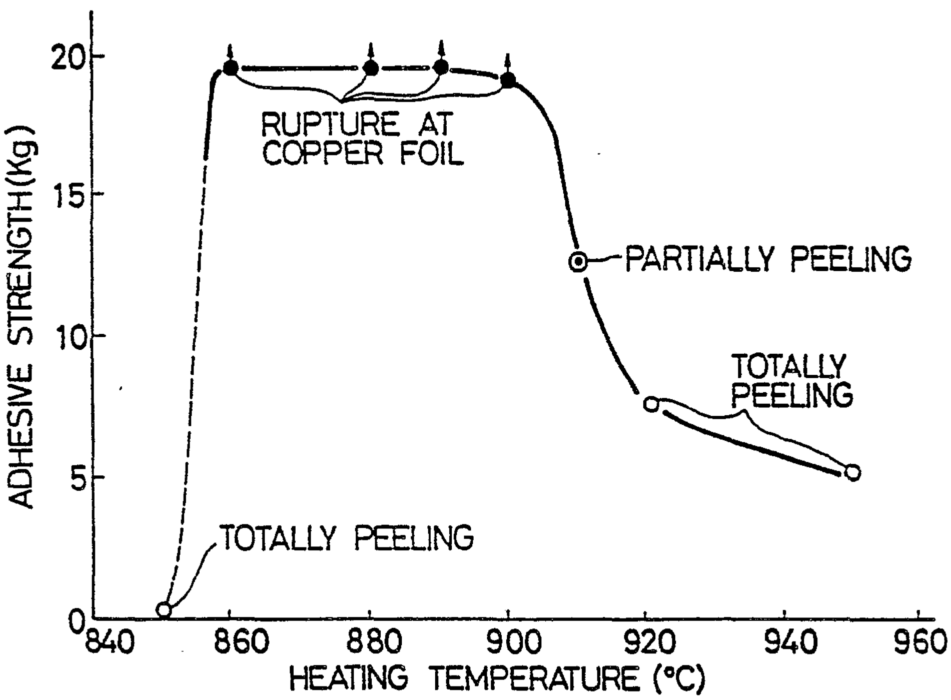

FIG. 5

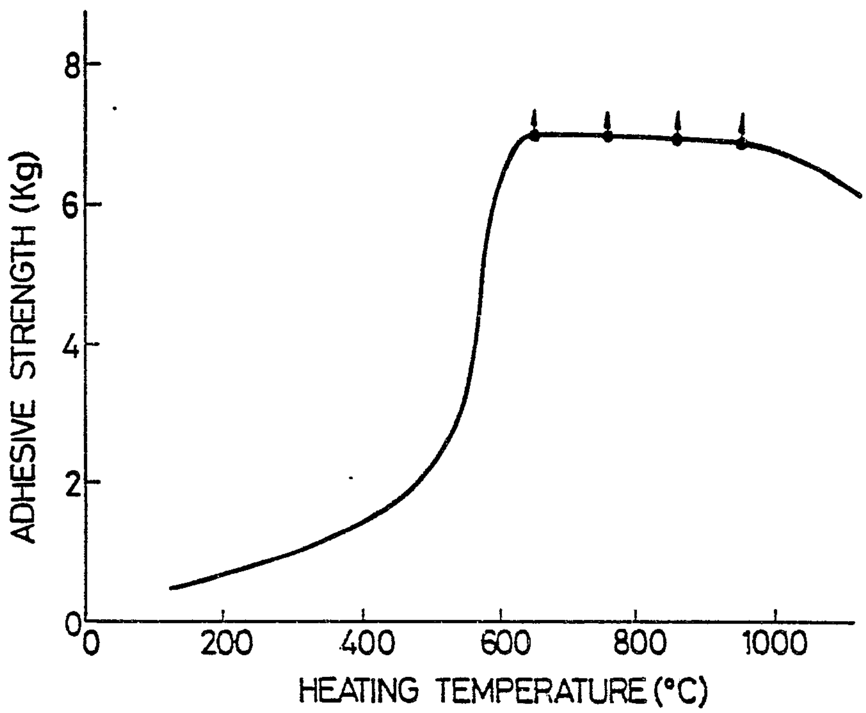
ADHESIVE STRENGTH (Kg)
0
2
4
6
8
0
200
400
600
800
1000
HEATING TEMPERATURE (°C)

FIG. 6

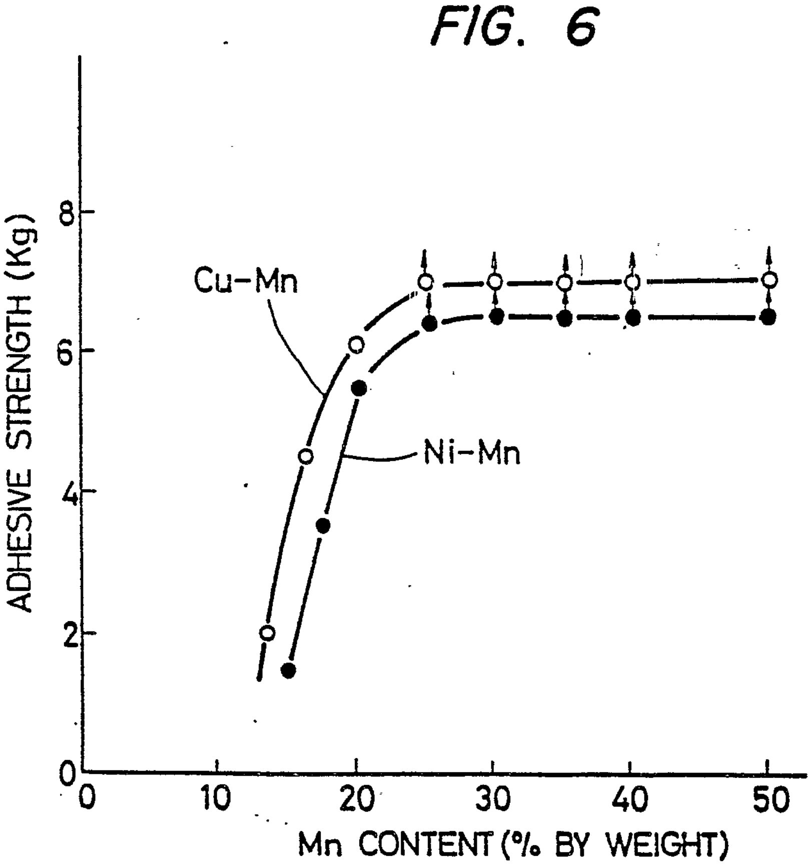
ADHESIVE STRENGTH (Kg)
0
2
4
6
8
Cu-Mn
Ni-Mn
0
10
20
30
40
50
Mn CONTENT (% BY WEIGHT)